# EUROPÄISCHE PATENTSCHRIFT

(11) **EP 0 521 191 B1**
(45) Veröffentlichungstag und Bekanntmachung des Hinweises auf die Patenterteilung: **02.05.1997**
(21) Anmeldenummer: 91117544.6
(22) Anmeldetag: 15.10.1991
(51) Int. Cl.: G11B 15/18, G11B 15/467, G11B 15/14

(54) **Videogerät für den Wiedergabebetrieb mit veränderbarer Bandtransportgeschwindigkeit**
Video apparatus for reproduction with a variable tape drive speed
Appareil vidéo pour une reproduction à vitesse variable d'entraînement de bande

(30) Priorität: 29.06.1991 DE 4121622
(43) Veröffentlichungstag der Anmeldung: 07.01.1993
(73) Patentinhaber: Grundig E.M.V. Elektro-Mechanische Versuchsanstalt Max Grundig GmbH & Co. KG, 90762 Fürth (DE)
(72) Erfinder: Körber, Matthias, c/o Grundig E.M.V., W-8510 Fuerth (DE); Richter, Manfred, c/o Grundig E.M.V., W-8510 Fuerth (DE)

(56) Entgegenhaltungen:
- DE-A- 3 635 255
- DE-A- 3 840 290
- US-A- 4 462 049
- US-A- 4 772 975

## Beschreibung

Für die Aufzeichnung und Wiedergabe breitbandiger Signale wie z.B. von analogen oder digitalen Bildsignalen, einem digitalen Tonsignal und sonstigen Datensignalen mit einem mit dem Band in Kontakt befindlichen Abtastelement wird eine hohe Abtastgeschwindigkeit, d.h. Relativgeschwindigkeit zwischen dem Abtastelement, z.B. einem Magnetkopf, und dem Aufzeichnungsträger, z.B. einem Magnetband, benötigt. Die Abtastgeschwindigkeit wird dadurch erreicht, daß der Magnetkopf in einer rotierenden Trommel montiert ist, entlang deren zylindrischer Außenwand das Magnetband schräg zur Längsrichtung transportiert wird.
Bei diesem Verfahren, dem sogenannten Schrägspurverfahren, werden die Signale entlang Spuren aufgezeichnet, die sich unter einem geringen Winkel, z.B. rund 6^{o} beim VHS-System, schräg zur Bandkante erstrecken. Wegen der erhöhten geometrischen Länge eines Spurabschnittes kann auf einem derartig schräg zur Bandkante verlaufenden Spurabschnitt beispielsweise ein Halbbild eines Videosignals aufgezeichnet werden.

Das Schrägspurverfahren hat die Eigenart, daß die Längsgeschwindigkeit des Magnetbandes bei der Wiedergabe gleich der Längsgeschwindigkeit bei der Aufnahme sein muß, damit die Magnetköpfe parallel zu den bei der Aufzeichnung beschriebenen Spuren laufen. Wenn die Längsgeschwindigkeit des Magnetbandes jedoch von der Längsgeschwindigkeit bei der Aufnahme abweicht, z.B. bei Zeitraffung, Zeitlupe, Standbild, schnellem Vor- oder Rücklauf, hat die abgetastete Spur bei der Wiedergabe zwangsläufig einen anderen Winkel als die bei der Aufnahme geschriebene und auf dem Magnetband befindliche Spur. Der Magnetkopf kann dann also nicht mehr der aufgezeichneten Spur folgen.

Eine bekannte Möglichkeit zur Korrektur der Spurabweichungen ist es, die Rotationsgeschwindigkeit der Trommel mit den Magnetköpfen so zu verändern, daß bei veränderter Längsgeschwindigkeit des Magnetbandes der sich dann ergebende Winkel, unter dem die Magnetköpfe das Magnetband abtasten, gleich dem Winkel der aufgezeichneten Schrägspuren ist. Zur Wiedergabe mit an die Magnetbandgeschwindigkeit angepaßter Rotationsgeschwindigkeit wird ein aufwendiger Servoregelkreis für die Magnetkopftrommel benötigt. Deshalb wird dieses Verfahren hauptsächlich für Videogeräte im Studiobereich eingesetzt. Aus der Veränderung der Rotationsgeschwindigkeit der Magnetkopftrommel ergibt sich außerdem der Nachteil, daß Horizontal- und Vertikalfrequenz bei der Wiedergabe der Videobilder verändert werden und somit nicht mehr mit den üblichen Normwerten übereinstimmen.

Eine andere bekannte Möglichkeit ist die Verwendung sogenannter Spurfolge-Nachsteuersysteme, welche mittels elektronischer Steuermittel den Magnetkopf senkrecht zu seiner Bewegungsrichtung so steuern, daß der Magnetkopf der aufgezeichneten Spur folgt. Dazu sind die Magnetköpfe auf langgestreckten Trägern montiert, die durch ein elektrisches oder magnetisches Feld ausgelenkt werden können. Die Träger können beispielsweise piezoelektrische Biegeelemente sein. In der DE-PS 27 11 703 wird ein derartiges Spurfolge-Nachsteuersystem genauer beschrieben. Auch bei dem Spurfolge-Nachsteuersystem treten veränderte Horizontal- und Vertikalfrequenzen auf.

Weiterhin ist bekannt, daß bei Videogeräten, die nach dem Schrägspurverfahren arbeiten und über zwei um 180° versetzte, rotierende Magnetköpfe verfügen, welche je ein Halbbild abtasten, ein Umschaltsignal erzeugt werden muß, das die Signalausgänge der Magnetköpfe so umschaltet, daß die abgetasteten Halbbilder ordnungsgemäß aneinandergefügt werden können. Dazu werden z.B. Lagengebermagnete benutzt, die auf der Trommel mitrotieren und die Winkelposition der Magnetköpfe anzeigen. Die Magnetköpfe werden dann umgeschaltet, wenn sich der Magnetkopf, der nach einer halben Umdrehung der Trommel wieder mit dem Magnetband in Berührung kommt, in einem Bereich vor den gültigen Daten, dem sogenannten Gap, befindet. Der Aufbau eines Generators zur Bestimmung der Winkelposition der Magnetköpfe und zur Erzeugung eines Magnetkopfumschaltsignals ist aus der DE-OS 37 10 740 ersichtlich.

Ferner ist bekannt, Fehler, die bei der Aufzeichnung und Wiedergabe mit Videogeräten entstehen, durch den Einsatz von Speichern auszugleichen. Diese Fehlerkorrektur ist bekannt als Zeitfehlerausgleich oder Timebase-Korrektur und wird durch den Einsatz von Speichern erreicht, deren Speicher mindestens die Datenmenge aufnehmen kann, die zum Ausgleich des maximal auftretenden Zeitfehlers nötig ist. Zeitfehlerausgleicher werden u.a. dann eingesetzt, wenn eine andere als die normale Längsgeschwindigkeit des Magnetbandes bei der Wiedergabe gewünscht wird. Aufbau und Funktion eines Zeitfehlerausgleichers sind aus dem Aufsatz "Timebase-Korrektoren und Frame-Synchronisierer", erschienen in Fernseh- und Kino-Technik, 38. Jahrgang, Nr. 5-7/1984, ersichtlich. Das wesentliche Prinzip bei der Zeitfehlerkorrektur ist, die vom Magnetband mit zeitlichen Fehlern abgetasteten Signale in einen Speicher einzuschreiben und aus diesem zeitrichtig wiederauszulesen, d.h. mit dem für die Wiedergabe nötigen Takt.

Es ist außerdem bekannt, Mittel gegen die aus der Änderung der Bandtransportgeschwindigkeit resultierenden Probleme einzusetzen, die eine Kombination der bereits beschriebenen Möglichkeiten beinhalten. Ein Videogerät für Sonderbetriebsarten, d.h. mit veränderbarer Bandtransportgeschwindigkeit, das sowohl über auslenkbare Magnetköpfe zur Spurnachführung als auch über den Magnetköpfen nachgeschaltete Speicher zur Zeitfehlerkorrektur verfügt, ist beispielsweise aus der DE-PS 30 45 541 bekannt.

Beim Einsatz der oben beschriebenen Einrichtungen tritt jedoch noch immer, auch bei der Kombination dieser Einrichtungen, ein Datenverlust auf, wenn die Wiedergabe mit einer von der Längsgeschwindigkeit des Magnetbandes bei der Aufzeichnung abweichenden Längsgeschwindigkeit erfolgen soll und die Rotationsgeschwindigkeit der Magnetkopftrommel nicht verändert wird. Zu diesem Datenverlust kommt es, da nicht sichergestellt ist, daß der gesamte Informationsgehalt der aufgezeichneten Videosignaleinheit, d.h. alle zur Bildwiedergabe notwendigen Bildzeilen, korrekt in den Speicher eingeschrieben werden, um zur Wiedergabe aus diesem ausgelesen werden zu können. Ursache dafür ist, daß die Steuersignale zum Einschreiben der vom Magnetband abgetasteten Bilddaten in den Speicher - wegen der durch die veränderte Längsgeschwindigkeit des Magnetbandes nicht zeitrichtig erzeugten Magnetkopfumschaltsignale und der Auslenkung der Magnetköpfe durch das Spurfolge-Nachsteuersystem - ebenfalls nicht mehr zeitrichtig erzeugt werden. Deshalb werden die Magnetköpfe nicht am Anfang der abzutastenden Schrägspur, d.h. im dafür vorgesehenen Umschaltbereich (Gap), umgeschaltet.

Aufgabe der vorliegenden Erfindung ist es deshalb, ein Videogerät anzugeben, das bei veränderter Transportgeschwindigkeit des Magnetbandes im Wiedergabebetrieb die vollständigen Bilddaten störungsfrei wiedergibt, ohne daß dazu die Rotationsgeschwindigkeit der Magnetkopftrommel verändert werden muß.

Erfindungsgemäß wird diese Aufgabe durch ein Videogerät mit den Merkmalen des Patentanspruchs 1 gelöst.

Der Vorteil der Erfindung liegt darin, daß bei der Wiedergabe mit veränderter Transportgeschwindigkeit des Magnetbandes die aufgezeichneten Videosignaleinheiten vollständig wiedergegeben werden können, also ohne fehlende Bildzeilen. Im Fall einer langsameren Bandgeschwindigkeit, dies schließt auch Bandstillstand und Bandrücklauf ein, ist die Wiedergabe von Vollbildern möglich. Bei einer erhöhten Bandgeschwindigkeit ist die Wiedergabe eines vollständigen Halbbildes möglich. Dies ist ausreichend, da bei schneller Wiedergabe auf eine bessere zeitliche Auflösung verzichtet werden kann. Außerdem erlaubt es die Erfindung, einen sehr kleinen Bereich ohne gültige Daten (Gap) als Umschaltzone für die Magnetköpfe vorzusehen, da das Umschaltsignal für die Magnetköpfe abhängig von der Bandgeschwindigkeit und der Auslenkung der Magnetköpfe nachgeregelt wird. Durch die mit geringem Aufwand zu erreichende Veränderung des Umschaltsignals für die Magnetköpfe und des Signals für die Steuerung des Speichers, muß für die Wiedergabe der vollständigen Videosignaleinheiten die Rotationsgeschwindigkeit der Magnetkopftrommel nicht geändert werden, wodurch ein einfacher Servo zur Regelung der Rotationsgeschwindigkeit verwendet werden kann.

Von besonderem Vorteil ist die Erfindung im Zusammenhang mit Videogeräten mit Mehrkanalaufzeichnung, bei denen jedes Halbbild auf mehrere Kanäle aufgeteilt und mittels mehrerer Magnetköpfe in mehreren, zueinander parallelen Schrägspuren aufgezeichnet wird. Jeder der Magnetköpfe tastet dabei eine Spur ab. Da bei der Aufzeichnung die Information eines Halbbildes auf mehrere Kanäle bzw. Magnetköpfe verteilt wird, ist es bei der Wiedergabe besonders wichtig, die aufgezeichneten Informationen vollständig zu lesen, damit das Halbbild aus den aus mehreren Spuren wiedergegebenen Teilinformationen störungsfrei zusammengesetzt werden kann.

Die Erfindung wird im folgenden anhand von Zeichnungen beispielhaft näher beschrieben.

Es zeigt:
Figur 1 die Abtastbahnen eines Magnetkopfes auf dem Magnetband bei unterschiedlichen Bandtransportgeschwindigkeiten,
Figur 2 die durch die Auslenkung der Magnetköpfe durch das Spurfolge-Nachsteuersystem verursachten Verschiebungen des Kopfumschaltsignals,
Figur 3 die Magnetkopfstellung bei einer Wiedergabebandgeschwindigkeit, die kleiner als die Aufzeichnungsbandgeschwindigkeit ist,
Figur 4 die Magnetkopfstellung bei einer Wiedergabebandgeschwindigkeit, die größer als die Aufzeichnungsbandgeschwindigkeit ist,
Figur 5 ein Blockschaltbild eines Teils eines Videogerätes nach der Erfindung, und
Figur 6 den zeitlichen Verlauf des aufgezeichneten Videosignals und der erfindungsgemäß veränderten Steuersignale bei der Wiedergabe mit unterschiedlichen Magnetbandtransportgeschwindigkeiten.

Bei der folgenden Erläuterung wird zunächst davon ausgegangen, daß in den Schrägspuren des Magnetbandes jeweils ein Halbbild aufgezeichnet wird bzw. ist.

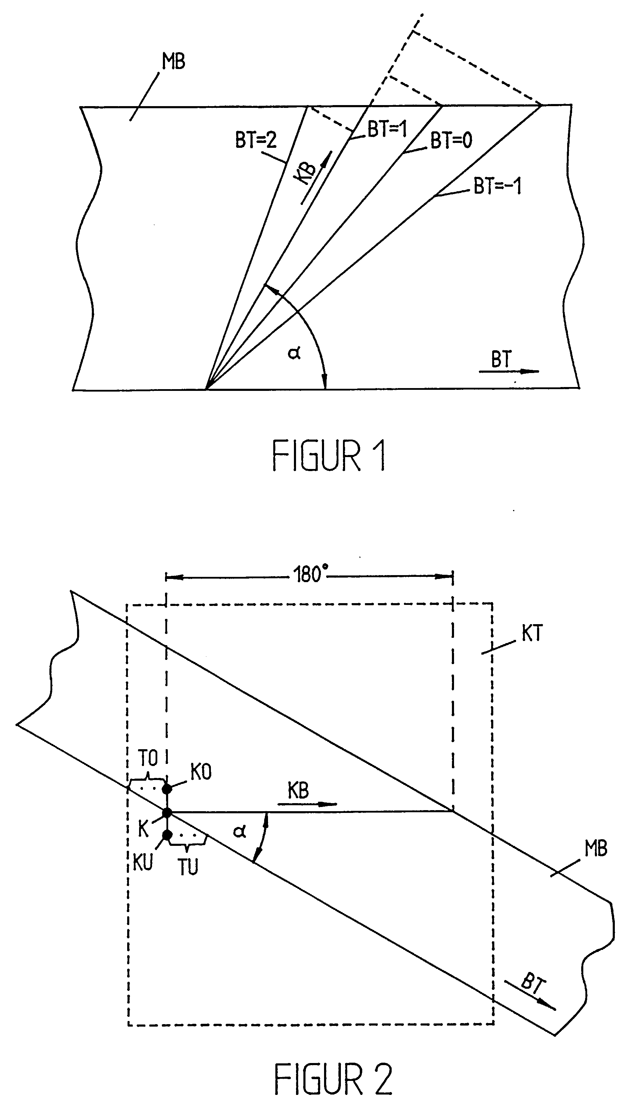

In Figur 1 sind die Abtastbahnen eines Magnetkopfes, der in Richtung KB über das Magnetband MB bewegt wird, für verschiedene Transportgeschwindigkeiten BT des Magnetbandes MB zu sehen. Das Magnetband MB wird dabei in die eingezeichnete Richtung BT transportiert. Der durch das verwendete System bestimmte, sich aus der Aufzeichnungsbandgeschwindigkeit ergebende Schrägspurverlauf ist mit BT=1 gekennzeichnet. Für diesen Fall ergibt sich ein Schrägspurwinkel .

Wird im Wiedergabefall von der Geschwindigkeit BT=1 abgewichen, so wird für schnellere Bandtransportgeschwindigkeiten BT der Schrägspurwinkel größer und der vom Magnetkopf abgetastete Schrägspurverlauf, gekennzeichnet mit BT=2, kürzer. Da bei der Aufzeichnung die Schrägspuren aber entsprechend BT=1 aufgezeichnet wurden, muß der Magnetkopf relativ gesehen senkrecht nach unten zur Bewegungsrichtung KB ausgelenkt werden, um dem tatsächlichen Verlauf folgen zu können. Aus der gestrichelt eingezeichneten Projektionslinie von der Abtastbahn für BT=2 auf den Spurverlauf BT=1 ist ersichtlich, daß durch die steilere Abtastbahn für BT=2 die vollständige Abtastung der aufgezeichneten Halbbilddaten in der zur Verfügung stehenden Zeit nicht mehr möglich ist.

Für den Fall einer langsameren Bandtransportgeschwindigkeit, also z.B. für Bandstillstand BT=0 oder Bandrücklauf BT=-1, wird die sich ergebende Abtastbahn flacher und die vom Magnetkopf abgetastete Strecke länger. In diesem Fall muß der Magnetkopf senkrecht nach oben zu seiner Bewegungsrichtung KB ausgelenkt werden, um den Verlauf der aufgezeichneten Schrägspur BT=1 folgen zu können. Dadurch könnte der Magnetkopf, wie gestrichelt angedeutet, während der Zeit, in der er das Magnetband abtastet, eine größere Datenmenge als die eines Halbbildes lesen.

Wegen dieser Dehnung bzw. Stauchung des Abtastweges der Magnetköpfe ist es bei veränderten Wiedergabebandgeschwindigkeiten nötig, das Kopfumschaltsignal zeitlich zu verschieben und das zum Steuern des Einschreibevorgangs in den Speicher, bei dem es sich vorzugsweise um einen Bildspeicher handelt, verwendete Signal zusätzlich zeitlich zu dehnen oder zu stauchen. Im Fall der Wiedergabe mit schnellerer Bandgeschwindigkeit führt die erfolgende Dehnung aber dazu, daß nur noch ein vollständiges Halbbild abgetastet werden kann. Für langsamere Wiedergabebandgeschwindigkeiten muß das Speicherschreibsignal gestaucht werden. Dadurch wird vermieden, daß falsche Daten, z.B. Audiodaten, die sich in Randspuren entlang der Bandkante des Magnetbandes befinden können, eingeschrieben werden.

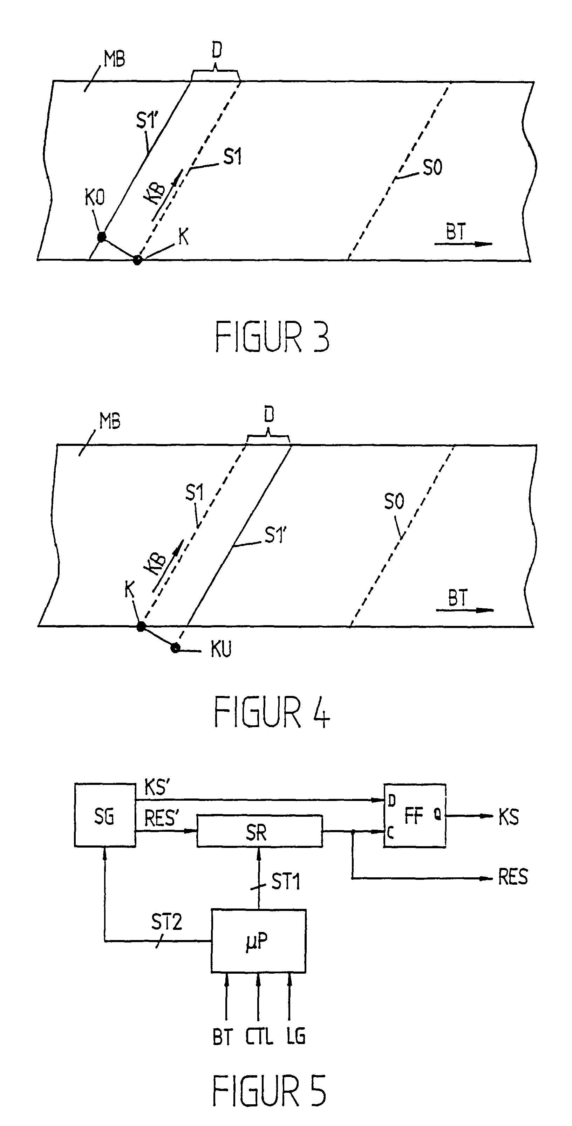

Die Figuren 3 und 4 stellen das Magnetband MB mit abweichenden Wiedergabebandgeschwindigkeiten BT und den sich daraus ergebenden, veränderten Lagen der Schrägspuren dar. In beiden Figuren stellen die Spuren S0 und S1 die Lage zweier Schrägspuren bei normaler Bandgeschwindigkeit BT dar. Die Abtastung der Schrägspuren durch die Magnetköpfe beginnt dabei an der mit K gekennzeichneten Position. Wurde beginnend mit der Abtastung der Schrägspur S0 die Geschwindigkeit verändert, so ergibt sich für die nächste abzutastende Schrägspur die neue Lage S1', mit einer Abweichung D von der Sollage S1. Dadurch liegt die nächste abzutastende Schrägspur S1' nicht am Startpunkt K des Magnetkopfes, der nun das Magnetband abtastet.

In Figur 3 sind die Schrägspuren für eine verringerte Bandtransportgeschwindigkeit BT<1 dargestellt. Das Magnetband MB wurde um die Strecke D zu wenig transportiert, so daß die abzutastende Schrägspur die Lage S1' und nicht die Sollage S1 hat, sondern um die Strecke D entgegen der Bandtransportrichtung BT verschoben ist. Um die Schrägspur mit der Lage S1' abtasten zu können, muß der Magnetkopf deshalb relativ zu seiner Bewegungsrichtung KB in die Position KO nach oben ausgelenkt werden.

Gilt für die Bandtransportgeschwindigkeit BT>1, wie in Figur 4 dargestellt, so wird das Magnetband um die Strecke D zu weit transportiert, wodurch sich die neuen Lage S1' ergibt. Soll die bei S1' liegende Schrägspur abgetastet werden, so muß der Magnetkopf aus der Position K relativ zu seiner Bewegungsrichtung KB nach unten in die Position KU ausgelenkt werden.

Die zur Auslenkung der Magnetköpfe nötigen Informationen werden dabei durch ein Spurfolge-Nachsteuersystem gewonnen, indem eine auf dem Magnetband bei der Aufzeichnung aufgebrachte Steuerspur (z.B. CTL-Spur) ausgewertet wird. Um bei Bandstillstand Informationen über die Lage der Schrägspuren aus der Steuerspur gewinnen zu können, wird ein sogenannter "Magnetic-Resist"-Kopf verwendet.

Wegen der Auslenkung der Magnetköpfe zur Spurfolge-Nachsteuerung stimmt das Umschaltsignal für die Magnetköpfe zeitlich nicht mehr mit dem Abtastbeginn der Schrägspuren überein. In Figur 3 ist zu sehen, daß bei der Auslenkung des Magnetkopfes nach KO die Umschaltung auf diesen Magnetkopf zu spät, also nach Beginn der Schrägspur, erfolgt. Daraus resultiert ein Verlust von Bilddaten. Figur 4 verdeutlicht dahingegen, daß bei einer Auslenkung des Magnetkopfes nach KU das Umschaltsignal den Magnetkopf zu früh einschaltet, wodurch ungültige Daten, z.B. Daten aus einer nicht gezeichneten Audio- oder Steuerspur, die üblicherweise längs zum Magnetband verlaufen, gelesen werden. In beiden Fällen kommt es zu fehlerhaften Bilddaten, so daß eine störungsfreie Wiedergabe der aufgezeichneten Halbbilder nicht möglich ist.

Die für die Figuren 3 und 4 beschriebene Auslenkung der Magnetköpfe durch das Spurfolge-Nachsteuersystem ändert sich für alle nachfolgenden Halbbilder, da sich die Lage der Schrägspuren jeweils um die Strecke D verschiebt. Die Figuren 3 und 4 dienen nur zur beispielhaften Beschreibung der Auslenkung der Magnetköpfe. Im Betrieb wird die Auslenkung der Magnetköpfe und damit die zeitliche Verschiebung der Steuersignale zu Beginn der jeweils abzutastenden Schrägspur durch Auswertung des Lagengebersignals, der auf dem Magnetband befindlichen Steuerspur, sowie der Bandtransportgeschwindigkeit gewonnen.

In Figur 2 ist die relative Lage von Magnetkopftrommel KT und Magnetband MB in einer Abwicklungszeichnung dargestellt. Eine Schrägspur mit Neigungswinkel ergibt sich durch eine halbe Drehung (180°) der Trommel KT. Für eine Auslenkung des Magnetkopfes aus der Normalstellung K nach KO, also nach oben, ist bei der vorgegebenen Bewegungsrichtung KB der Trommel und damit des Magnetkopfes zu sehen, daß das Umschaltsignal um die Zeitspanne vorverlegt werden muß, die der Magnetkopf zum Abtasten der Strecke TO benötigt. Für die Auslenkung nach KU, also nach unten, muß demzufolge das Umschaltsignal um eine Zeitspanne verzögert werden, die der Magnetkopf zum Abtasten der Strecke TU benötigt.

Zur Korrektur der durch eine im Vergleich zur Aufnahme veränderten Bandgeschwindigkeit bei der Wiedergabe hervorgerufenen Änderungen der Abtastverhältnisse unter Beibehaltung der Rotationsgeschwindigkeit der Magnetkopftrommel müssen deshalb die Steuersignale für die Magnetkopfumschaltung sowie zur Steuerung des Einschreibens in den Speicher geändert werden. Wie oben beschrieben muß das Tastverhältnis der Steuersignale sowie ihre Phasenlage der Bandtransportgeschwindigkeit bzw. der Auslenkung der Magnetköpfe angepaßt werden.

In Figur 5 ist das Blockschaltbild eines Teils eines Videogerätes nach der Erfindung zu sehen. Das Blockschaltbild zeigt einen Signalgenerator SG, der ein erstes Steuersignal KS' und ein zweites Steuersignal RES' erzeugt. Aus dem ersten Steuersignal KS' wird das Magnetkopfumschaltsignal KS abgeleitet und aus dem zweiten Steuersignal RES' das Rücksetzsignal RES für das Einschreiben in den Speicher. Das Rücksetzen des Speichers sowie der Einschreibvorgang werden mit RES="High" und der ersten gültigen Zeile eines Halbbildes gestartet. Das Ende des Einschreibvorgangs in den Speicher wird durch RES="Low" und dem Ende der letzten gültigen Zeile bestimmt. Aus dieser Steuerung des Einschreibvorgangs ergibt sich der Vorteil, daß nur geringe Anforderungen an die zeitliche Genauigkeit der Steuersignale KS und RES gestellt werden müssen, weshalb die Erzeugung der Steuersignale durch einen Mikroprozessor µP gesteuert werden kann.

Ein weiterer Bestandteil des Blockschaltbildes ist ein Schieberegister SR, mit dem das Signal RES' verzögert werden kann, wodurch das Signal RES entsteht. Desweiteren ist ein einflankengetriggertes Flip-Flop FF vorhanden, welches das am D-Eingang anliegende Kopfumschaltsignal KS' in Abhängigkeit vom am Takteingang C anliegenden Signal RES schaltet und an seinem Ausgang Q das Kopfumschaltsignal KS zur Verfügung stellt. Sowohl der Signalgenerator SG als auch das Schieberegister SR werden in ihrer Funktion von dem Prozessor µP gesteuert. Dieser wertet das Signal des Lagengebers LG der Magnetkopftrommel, welches Auskunft über die Winkellage der Magnetköpfe gibt, das Signal der Steuerspur CTL, welches Auskunft über die Position der Schrägspuren bezogen auf die Normalstellung des abtastenden Magnetkopfes liefert, und die zur Wiedergabe eingestellte Transportgeschwindigkeit BT des Magnetbandes aus.

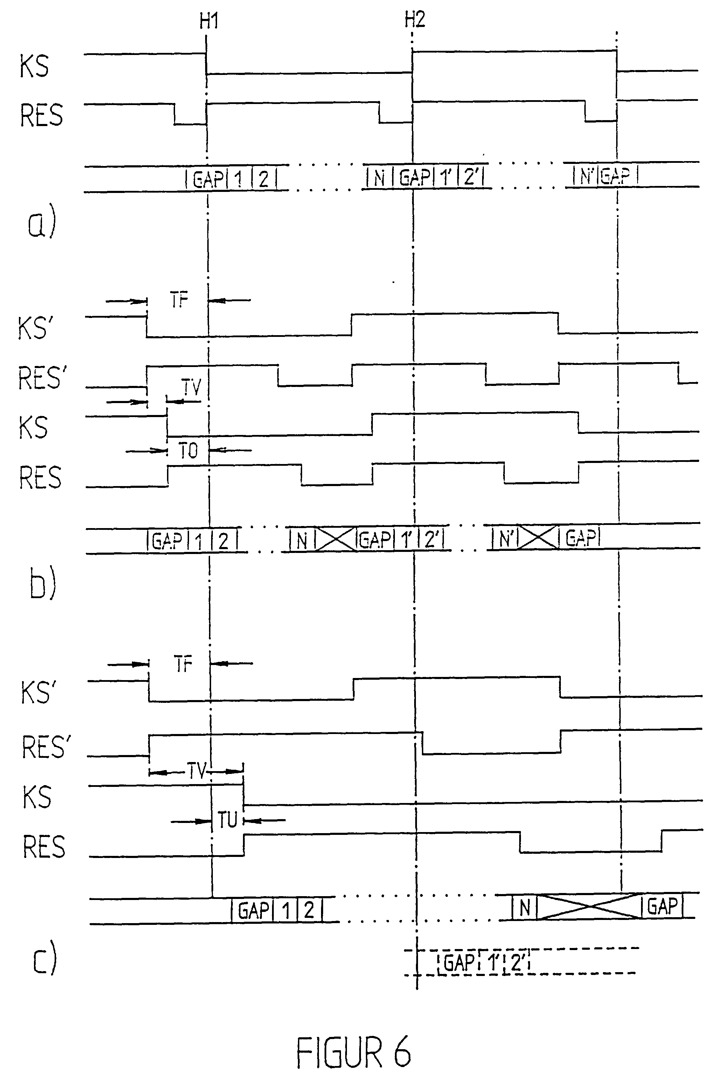

Die durch eine Schaltung nach Figur 5 erzeugten Signalverläufe sowie die von den Magnetköpfen abgetasteten Bildinformationen sind in Figur 6 dargestellt.

Wie oben beschrieben müssen für veränderte Geschwindigkeiten des Magnetbandes die Steuersignale zeitlich früher oder später erzeugt werden. Da sich in der Praxis nur eine Verzögerung realisieren läßt, werden die Steuersignale bei veränderten Bandgeschwindigkeiten durch den Signalgenerator SG verfrüht erzeugt, und zwar um die Zeitspanne verschoben, die zum Ausgleich der größten Magnetkopfauslenkung nach oben ausreicht.
Die verfrühte Erzeugung der Steuersignale durch den Signalgenerator SG ist möglich, da die Steuersignale von den Signalen des Lagengebers LG abgeleitet werden, der den Magnetköpfen bei der Drehung der Magnetkopftrommel vorauseilt.

Figur 6a stellt die Signale KS und RES sowie die abgetasteten Bildinformationen bei einer Wiedergabebandgeschwindigkeit dar, die der Geschwindigkeit bei der Aufzeichnung entspricht. Die in den Schrägspuren aufgezeichneten Halbbilder haben N Bildzeilen, die im ersten Halbbild eines Vollbildes mit 1, 2, ..., N gekennzeichnet sind und im zweiten Halbbild mit 1', 2', ..., N'. Zwischen den Halbbildern befindet sich der zur Umschaltung der Magnetköpfe vorgesehene, datenlose Bereich GAP. Da Wiedergabe- und Aufzeichnungsbandgeschwindigkeit übereinstimmen, müssen die vom Signalgerator SG erzeugten Steuersignale KS' und RES' nicht verändert werden. Der Prozessor µP stellt deshalb über die Steuerleitungen ST2 den Signalgenerator SG so ein, daß die Steuersignale KS' und RES' in bekannter Weise aus den Signalen des Lagengebers LG erzeugt werden.
Außerdem wird über die Steuerleitungen ST1 das Schieberegister SR so eingestellt, daß es keine Verzögerung des Steuersignals RES' bewirkt. Für die normale Bandtransportgeschwindigkeit bei der Wiedergabe stimmen die Signale KS' und KS sowie RES' und RES deshalb überein.

Für die Abtastung des ersten Halbbildes 1, 2, ..., N wird der erste Magnetkopf zum Zeitpunkt H1 durch das Umschaltsignal KS im vorgesehenen Bereich GAP umgeschaltet. Das Signal RES ermöglicht das Einschreiben der abgetasteten Bilddaten in den Speicher, beginnend nach dem Horizontalsynchronisationsimpuls der Bildzeile 1. Mit dem Ende der Bildzeile N wird das Einschreiben durch RES beendet und im folgenden GAP wird zum Zeitpunkt H2 durch KS auf den zweiten Magnetkopf umgeschaltet. Die Abtastung des zweiten Halbbildes 1', 2', ..., N' erfolgt entsprechend dem ersten Halbbild.

Wird, wie für Figur 3 beschrieben, die Bandtransportgeschwindigkeit verringert, so muß die Schaltflanke der Signale KS und RES für die folgenden Halbbilder vor den Zeitpunkten H1 und H2 liegen, da die Magnetköpfe zu Beginn des Abtastvorgangs nach oben ausgelenkt sind. Das Schreibsignal RES muß verändert werden, da die Bilddaten in einer kürzeren Zeit vom Magnetband gelesen werden.

In Figur 6b sind die Verläufe der Steuersignale und der gelesenen Bilddaten wiedergegeben. Die Steuersignale KS' und RES' werden, sobald vom Prozessor µP eine veränderte Bandtransportgeschwindigkeit BT erfaßt wird, wie oben beschrieben um eine maximale Zeit TF verfrüht (im Vergleich zu dem in Figur 6a dargestellten Betrieb mit normaler Bandtransportgeschwindigkeit) vom Signalgenerator SG erzeugt. Die veränderte Bandtransportgeschwindigkeit BT kann beispielsweise von den Signalen der Eingabeeinheit abgeleitet werden, mit der die Bandtransportgeschwindigkeit eingestellt wird. Weitere Möglichkeiten sind die Auswertung der Signale CTL der Steuerspur oder der Signale des Bandtransportservos. Der Signalgenerator SG wird über die Steuerleitungen ST2 vom Prozessor µP angesteuert. Dabei wird auch die Veränderung des Tastverhältnisses von RES' bewirkt, da sich zwischen den letzten Zeilen eines jeden Halbbildes N bzw. N' und dem jeweils folgenden GAP eine Zone befindet, in der die Magnetköpfe keine gültigen Bilddaten vorfinden. Um die sich wegen der Auslenkung des Magnetkopfes nach oben ergebende Verschiebung TO zum Zeitpunkt H1 bzw. H2 richtig einzustellen, bestimmt der Prozessor µP anhand der Größe der Auslenkung des Magnetkopfes die nötige Verzögerungszeit TV, um die voreingestellte, maximale Zeitverschiebung TF des Signals RES' abzustimmen. Die ermittelte Verzögerungszeit TV wird über die Steuerleitungen ST1 am Schieberegister SR eingestellt. Dadurch entsteht das Signal RES, von dem mittels Flip-Flop FF auch das zeitrichtige Kopfumschaltsignal KS aus KS' abgeleitet wird.

Wird die Bandgeschwindigkeit wie für Figur 4 beschrieben erhöht, so muß die Schaltflanke der Signale KS und RES verzögert werden und das Tastverhältnis des Signals RES muß verändert werden, da zum Lesen der Bilddaten eine längere Zeit als bei Normalgeschwindigkeit des Bandes benötigt wird. Aus diesem Grund ist nur noch die Wiedergabe eines Halbbildes pro Vollbild möglich.

In Figur 6c sind die Verläufe der Steuersignale und der Bilddaten wiedergegeben. Wie oben beschrieben werden bei veränderter Bandgeschwindigkeit die Signale KS' und RES' vom Signalgenerator SG um die Zeitspanne TF verfrüht erzeugt. Das Signal RES' wird so geändert, daß nur noch das erste Halbbild 1, 2, ..., N in den Speicher geschrieben werden kann, weil die dazu benötigte Zeitspanne größer als die im Fall der normalen Bandgeschwindigkeit ist. Das gestrichelt dargestellte zweite Halbbild 1', 2', ... kann deshalb nicht mehr vollständig abgetastet werden und das Einschreiben in den Speicher muß unterbleiben. Um die Schaltflanken der Signale KS und RES im vorgesehenen Kopfumschaltbereich GAP zu erzeugen, wird RES' durch das Schieberegister SR um die vom Prozessor µP über die Steuerleitungen ST1 eingestellte Zeit TV verzögert. Durch diese Verzögerung ergibt sich zusammen mit der um TF zu frühen Erzeugung des Steuersignals RES' im Signalgenerator SG die benötigte Verzögerung TU, die der Verschiebung des Kopfumschaltbereichs GAP gegenüber dem Zeitpunkt H1 entspricht.

Das Schieberegister SR muß in der Lage sein, das Steuersignal RES' um mindestens zweimal TF zu verzögern, da TF der Zeitspanne einer maximalen Auslenkung des Magnetkopfes nach oben entspricht. Erfolgt die maximale Auslenkung in die entgegengesetzte Richtung, so ergibt sich eine gleich große Verzögerungszeit, die zur Vorverschiebung TF des Steuersignals RES' addiert werden muß, so daß bei der maximalen Auslenkung nach unten die Verzögerung um zwei TF nötig ist.

Die Erzeugung der Signale KS und RES erfolgt also für alle Wiedergabebandgeschwindigkeiten, die von der Aufnahmebandgeschwindigkeit abweichen, aus dem um die Zeitspanne TF zu früh erzeugten Steuersignal RES', welches dann abhängig von der Magnetkopfauslenkung verzögert wird. Desweiteren wird das Steuersignal RES' abhängig von der eingestellten Bandtransportgeschwindigkeit so verändert, daß es den Einschreibvorgang von Bilddaten in den Speicher nur für gültige Bilddaten erlaubt, also bei langsameren Bandgeschwindigkeiten eine kürzere und bei schnelleren Bandgeschwindigkeiten eine längere Einschreibzeit erlaubt, bezogen auf die Normalgeschwindigkeit des Magnetbandes bei der Aufnahme. Bei der schnelleren Bandgeschwindigkeit ist wegen der längeren Abtastzeit der Halbbilder nur die Wiedergabe eines Halbbildes pro Vollbild möglich.

Für die Wiedergabe werden die Bilddaten aus dem Speicher so ausgelesen, daß die sich ergebenden Vertikal- und Horizontalfrequenzen den üblichen Normwerten entsprechen.

Die beschriebene Erfindung läßt sich auch für Videogeräte verwenden, die nach dem Mehrkanalverfahren arbeiten. Bei diesen Videogeräten wird ein Halbbild auf mehrere Kanäle bzw. Schrägspuren verteilt. Für jede der Schrägspuren ist jeweils ein Magnetkopf vorhanden. Zur Erzeugung der Steuersignale für die jeweiligen Magnetköpfe müssen lediglich die vorhandenen Steuersignale wie oben beschrieben verändert werden und die dazu nötigen Schaltungsbestandteile - im wesentlichen das Schieberegister SR und das Flip-Flop FF - mehrfach vorhanden sein. Für jeden der Kanäle kann ein Signalgenerator SG vorhanden sein. Eine andere Möglichkeit ist es, nur einen Signalgenerator SG für den ersten Kanal, d.h. für den Magnetkopf, der die jeweils erste Schrägspur abtastet, vorzusehen. Die Steuersignale für die nachfolgenden Kanäle bzw. Schrägspuren werden durch eine zusätzliche Verzögerung in den Schieberegistern SR von dem Steuersignal RES' des einzigen Signalgenerators SG abgeleitet.

Die anhand Figur 5 beschriebene Erzeugung der Steuersignale stellt lediglich eine mögliche Ausführungsform dar. Für den kundigen Fachmann ist deshalb die Erzeugung der Steuersignale auf eine andere Art und Weise ohne Probleme möglich.

## Patentansprüche

1. Videomagnetbandgerät für den Wiedergabebetrieb mit veränderbarer Bandtransportgeschwindigkeit, die von der Bandtransportgeschwindigkeit bei Aufnahmebetrieb abweicht, mit
- mindestens zwei in einer rotierenden Trommel angeordneten Magnetköpfen zur Wiedergabe der in Schrägspuren aufgezeichneten Videosignale,
- einem Lagegeber zur Erzeugung eines Umschaltsignals für die Magnetköpfe in Abhängigkeit der Winkellage der Magnetköpfe zur aufeinanderfolgenden Wiedergabe der von den Schrägspuren abgetasteten Videosignale,
- einem Spurfolge-Nachsteuersystem für die exakte Verfolgung der aufgezeichneten Schrägspuren durch Auslenkung der Magnetköpfe senkrecht zu ihrer Bewegungsrichtung, und
- einem Speicher im Signalweg der von den Magnetköpfen abgetasteten und wiederzugebenden Videosignale,
**gekennzeichnet durch**
eine Schaltungseinrichtung (µP,SG,SR,FF), die in Abhängigkeit von der Bandtransportgeschwindigkeit (BT) und der sich daraus ergebenden Auslenkung des jeweils abtastenden Magnetkopfes das Speicherschreibsignal (RES) und das Magnetkopfumschaltsignal (KS) zeitlich verschiebt, wobei diese Signale (KS, RES) bei verringerter Bandgeschwindigkeit gegenüber ihrer durch die Magnetkopfrotationslage bestimmten Lage (H1, H2) voreilen (TO) und bei erhöhter Bandgeschwindigkeit nacheilen (TU).

2. Videomagnetbandgerät nach Anspruch 1,
**dadurch gekennzeichnet,**
daß die Auslenkung des jeweils abtastenden Magnetkopfes aus den Signalen (LG) des Magnetkopfrotationslagengebers und den Signalen (CTL) der Steuerspur des Magnetbandes abgeleitet wird.

3. Videomagnetbandgerät nach Anspruch 1 oder 2,
**dadurch gekennzeichnet**,
daß die Bandtransportgeschwindigkeit aus den Signalen (BT) einer Eingabeeinheit zur Einstellung der Bandtransportgeschwindigkeit abgeleitet wird.

4. Videogerät nach einem oder mehreren der vorhergehenden Ansprüche,
**dadurch gekennzeichnet**,
daß die Schaltungseinrichtung (µP,SG,SR,FF) aufweist:
- einen Signalgenerator (SG) zur Erzeugung eines ersten (KS') und eines zweiten (RES') Steuersignals, die gegenüber der Normallage des Kopfumschaltsignals und des Speicherschreibsignals um eine bestimmte Zeitspanne (TF) voreilen,
- eine Verzögerungseinrichtung (SR) zur Erzeugung des Speicherschreibsignals (RES) aus dem zweiten Steuersignal (RES'),
- ein Schaltglied (FF) zur Erzeugung des Kopfumschaltsignals (KS) aus dem ersten Steuersignal (KS') und dem Speicherschreibsignal (RES), und
- eine Steuereinrichtung (µP) zur Steuerung des Signalgenerators (SG) und der Verzögerungseinrichtung (SR).

5. Videomagnetbandgerät nach Anspruch 4,
**dadurch gekennzeichnet**,
daß das vom Signalgenerator (SG) erzeugte Steuersignal(RES') für Wiedergabebandtransportgeschwindigkeiten (BT) die größer sind als die Aufnahmebandtransportgeschwindigkeit eine längere Schreibzeit für ein Halbbild ermöglicht, und daß das andere Halbbild eines Vollbildes nicht in den Speicher geschrieben wird.

6. Videomagnetbandgerät nach Anspruch 4 oder 5,
**dadurch gekennzeichnet**,
daß das vom Signalgenerator (SG) erzeugte Steuersignal (RES') für Wiedergabebandtransportgeschwindigkeiten (BT), die kleiner sind als die Aufnahmebandtransportgeschwindigkeit eine kürzere Schreibzeit für die beiden Halbbilder eines Vollbildes aufweist.

7. Videogerät nach einem oder mehreren der Ansprüche 4 bis 6,
**dadurch gekennzeichnet**,
daß das vom Signalgenerator (SG) erzeugte zweite Steuersignal (RES') durch die Verzögerungseinrichtung (SR) nach Maßgabe der Auslenkung des jeweils abtastenden Magnetkopfes verzögert wird.

8. Videomagnetbandgerät nach Anspruch 7,
**dadurch gekennzeichnet**,
daß bei maximaler Auslenkung des Magnetkopfes nach unten, bezogen auf seine Bewegungsrichtung, der größte Verzögerungswert und bei maximaler Auslenkung des Magnetkopfes nach oben, bezogen auf seine Bewegungsrichtung, der kleinste Verzögerungswert eingestellt wird.

9. Videomagnetbandgerät nach Anspruch 4,
**dadurch gekennzeichnet**,
daß die maximal einstellbare Verzögerungszeit der
Verzögerungseinrichtung (SR) mindestens zweimal die bestimmte Zeitspanne (TF) ist.

10. Videomagnetbandgerät nach einem oder mehreren der Ansprüche 4 bis 9, bei dem der Informationsgehalt eines Halbbildes auf mehrere Kanäle bzw. Schrägspuren aufgeteilt ist,
**dadurch gekennzeichnet**,
daß für jeden Kanal ein Signalgenerator (SG), eine Verzögerungseinrichtung (SR) und ein Schaltglied (FF) vorhanden sind, die von einem Prozessor (µP) nach Maßgabe der Wiedergabebandtransportgeschwindigkeit (BT) und der Auslenkung (CTL,LG) der jeweiligen Magnetköpfe gesteuert werden.

11. Videomagnetbandgerät nach einem oder mehreren der Ansprüche 4 bis 9, bei dem der Informationsgehalt eines Halbbildes auf mehrere Kanäle bzw. Schrägspuren aufgeteilt. ist,
**dadurch gekennzeichnet**,
daß nur für den ersten Kanal ein Signalgenerator (SG) vorgesehen ist, und daß von dessen Steuersignalen (KS', RES') die Steuersignale für die anderen Kanäle im wesentlichen durch eine zusätzliche Verzögerung des Steuersignals (RES') in den Verzögerungseinrichtungen der anderen Kanäle abgeleitet werden.

## Claims

1. Video magnetic tape recorder for playback operation with variable tape transport speed which deviates from the tape transport speed during recording operation, comprising
- at least two magnetic heads, disposed in a rotating drum, for playing back the video signals recorded in the helical tracks,
- a precision sensor for generating a switchover signal for the magnetic heads as a function of the angular position of the magnetic heads for the purpose of consecutive playback of the video signals scanned from the helical tracks,
- a track-following control system for the precise tracking of the recorded helical tracks by deflecting the magnetic heads perpendicular to their direction of movement, and
- a memory in the signal path of the video signals scanned by the magnetic head and to be played back,
characterized by a circuit device (µP, SG, SR, FF) which shifts the memory write signal (RES) and the magnetic head switchover signal (KS) in time as a function of the tape transport speed (BT) and the deflection resulting therefrom of the respective scanning magnetic head, said signals (KS, RES) being advanced (TO) and retarded (TU) for reduced tape speed and increased tape speed, respectively, with respect to their position determined by the magnetic head rotational position.

2. Video magnetic tape recorder according to Claim 1, characterized in that the deflection of the respective scanning magnetic head is derived from the signals (LG) of the magnetic head rotational position sensor and the signals (CTL) of the control track of the magnetic tape.

3. Video magnetic tape recorder according to Claim 1 or 2, characterized in that the tape transport speed is derived from the signals (BT) of an input unit for setting the tape transport speed.

4. Video recorder according to one or more of the preceding claims, characterized in that the switching device (µP, SG, SR, FF) comprises
- a signal generator (SG) for generating a first control signal (KS') and a second control signal (RES') which are advanced by a certain time interval (TF) compared with the normal position of the head switchover signal and of the memory write signal,
- a delay device (SR) for generating the memory write signal (RES) from the second control signal (RES'),
- a switching member (FF) for generating the head switchover signal (KS) from the first control signal (KS') and the memory write signal (RES), and
- a control device (µP) for controlling the signal generator (SG) and the delay device (SR).

5. Video magnetic tape recorder according to Claim 4, characterized in that the control signal (RES') generated by the signal generator (SG) for playback tape transport speeds (BT) which are greater than the recording tape transport speed make possible a longer writing time for a field and in that the other field of a frame is not written into the memory.

6. Video magnetic tape recorder according to Claim 4 or 5, characterized in that the control signal (RES') generated by the signal generator (SG) for playback tape transport speeds (BT) which are less than the recording tape transport speed have a shorter writing time for the two fields of a frame.

7. Video recorder according to one or more of Claims 4 to 6, characterized in that the second control signal (RES') generated by the signal generator (SG) is delayed by the delay device (SR) in accordance with the deflection of the respective scanning magnetic head.

8. Video magnetic tape recorder according to Claim 7, characterized in that the maximum delay value is set in the case of maximum downward deflection of the magnetic head relative to its direction of movement and the minimum delay value is set in the case of maximum upward deflection of the magnetic head relative to its direction of movement.

9. Video magnetic tape recorder according to Claim 4, characterized in that the maximum settable delay time of the delay device (SR) is at least twice the time interval (TF) determined.

10. Video magnetic tape recorder according to one or more of Claims 4 to 9, in which the information content of a field is distributed over a plurality of channels or helical tracks, characterized in that one signal generator (SG), one delay device (SR) and one switching member (FS) are present for each channel and are controlled by a processor (µP) in accordance with the playback tape transport speed (BT) and the deflection (CTL, LG) of the respective magnetic heads.

11. Video magnetic tape recorder according to one or more of Claims 4 to 9, in which the information content of a frame is distributed over a plurality of channels or helical tracks, characterized in that a signal generator (SG) is provided only for the first channel and in that the control signals for the other channels are derived from its control signals (KS', RES') essentially by an additional delay of the control signal (RES') in the delay devices of the other channels.

## Revendications

1. Magnétoscope pour l'opération de reproduction avec une vitesse variable de déplacement de la bande, qui diffère de la vitesse de déplacement de la bande lors de l'opération d'enregistrement, comportant
- au moins deux têtes magnétiques, qui sont montées sur un tambour rotatif et servent à reproduire les signaux vidéo enregistrés sur des pistes obliques,
- un capteur de position pour produire un signal de commutation pour les têtes magnétiques en fonction de la position angulaire des têtes magnétiques pour la reproduction successive des signaux vidéo explorés sur les pistes obliques,
- un système d'asservissement sur une suite de pistes pour le suivi précis des pistes obliques enregistrées, par déviation des têtes magnétiques perpendiculairement à leur direction de déplacement, et
- une mémoire insérée dans le trajet des signaux vidéo explorés et devant être reproduits par les têtes magnétiques,
caractérisé par
un montage (µP,SG,SR,FF), qui, en fonction de la vitesse (BT) de déplacement de la bande et de la déviation, qui en résulte, de la tête magnétique effectuant respectivement l'exploration, décale dans le temps le signal (RES) d'écriture dans la mémoire et le signal (KS) de commutation des têtes magnétiques, ces signaux (KS,RES) étant en avance (To) par rapport à leur position déterminée par la position en rotation des têtes magnétiques, lorsque la vitesse de bande est réduite et étant en retard (Tv) par rapport à cette position, dans le cas d'une vitesse de bande accrue.

2. Magnétoscope selon la revendication 1, caractérisé en ce que la déviation de la tête magnétique exécutant respectivement l'exploration est dérivée des signaux (LG) du capteur de position en rotation des têtes magnétiques et des signaux (CTL) de la piste de commande de la bande magnétique.

3. Magnétoscope selon la revendication 1 ou 2, caractérisé en ce que la vitesse de déplacement de la bande est dérivée des signaux (BT) d'une unité d'entrée pour le réglage de la vitesse de déplacement de la bande.

4. Appareil vidéo selon une ou plusieurs des revendications précédentes, caractérisé en ce que le montage (µP,SG,SR,FF) possède :
- un générateur de signaux (SG) pour produire un premier signal de commande (KS') et un second signal de commande (RES'), qui sont en avance, d'un intervalle de temps déterminé (TF), par rapport à la position normale du signal de commutation des têtes et du signal d'écriture dans la mémoire,
- un circuit de retardement (SR) pour produire le signal (RES) d'écriture en mémoire à partir du second signal de commande (RES'),
- un circuit de commutation pour produire le signal (KS) de commutation des têtes à partir du premier signal de commande (KS') et du signal (RES) d'écriture en mémoire, et
- un dispositif de commande (µP) pour commander le générateur de signaux (SG) et le dispositif de retardement (SR).

5. Magnétoscope selon la revendication 4, caractérisé en ce que le signal de commande (RES') produit par le générateur de signaux (SG) pour des vitesses (BT) de déplacement de la bande de reproduction, qui sont supérieures à la vitesse de déplacement de la bande d'enregistrement, permet un temps d'écriture plus long pour une trame, et que l'autre trame d'une image complète n'est pas écrite dans la mémoire.

6. Magnétoscope selon la revendication 4 ou 5, caractérisé en ce que le signal de commande (RES') produit par le générateur de signaux (SG) pour des vitesses (BT) de déplacement de la bande de reproduction, qui sont inférieures à la vitesse de déplacement de la bande d'enregistrement, possède un temps d'écriture plus court pour les deux trames d'une image complète.

7. Magnétoscope selon une ou plusieurs des revendications 4 à 6, caractérisé en ce que le second signal de commande (RES') produit par le générateur de signaux (SG) est retardé par le circuit de retardement (SR) en fonction de la déviation de la tête magnétique qui effectue respectivement l'exploration.

8. Magnétoscope selon la revendication 7, caractérisé en ce que, pour la déviation maximale de la tête magnétique vers le bas, par rapport à sa direction de déplacement, la valeur maximale de retardement est réglée et que pour la déviation maximale de la tête magnétique vers le haut, par rapport à sa direction de déplacement, la valeur de retardement minimale est réglée.

9. Magnétoscope selon la revendication 4, caractérisé en ce que le retard maximum réglable du dispositif de retardement (SR) est égal au moins au double de l'intervalle de temps déterminé (TF).

10. Magnétoscope selon une ou plusieurs des revendications 4 à 9, dans lequel le contenu en informations d'une trame est réparti entre plusieurs canaux ou pistes obliques, caractérisé en ce que pour chaque canal il est prévu un générateur de signaux (SG), un dispositif de retardement (SR) et un circuit de commutation (FF), qui sont commandés par un processeur (µP) en fonction de la vitesse (BT) de déplacement de la bande de reproduction et de la déviation (CTL,LG) des têtes magnétiques respectives.

11. Magnétoscope selon une ou plusieurs des revendications 4 à 9, dans lequel le contenu en informations d'une trame est réparti entre plusieurs canaux ou pistes obliques, caractérisé en ce qu'un générateur de signaux (SG) est prévu uniquement pour le premier canal et que les signaux de commande pour les autres canaux sont dérivés des signaux de commande (KS',RES') de ce générateur de signaux, essentiellement par un retard supplémentaire du signal de commande (RES') dans les dispositifs de retardement des autres canaux.
